# EUROPEAN PATENT APPLICATION

(11) **EP 4 841 957 A2**
(43) Date of publication of application: **18.11.2026**
(21) Application number: 26203805.2
(22) Date of filing: 15.12.2015
(51) Int. Cl.: H04L 51/10

(54) **GALLERY OF MESSAGES WITH A SHARED INTEREST**

(30) Priority: 19.12.2014 US 201414578258
(62) Document number(s) of the earlier application(s) in accordance with Art. 76 EPC: 24168534.6 / 4 391 486; 20173925.7 / 3 713 159; 15870861.0 / 3 234 794
(71) Applicant: Snap Inc., Santa Monica, CA 90405 (US)
(72) Inventor: SEHN, Timothy Michael, Santa Monica, 90405 (US)
(74) Representative: Mathys & Squire

(57) **Abstract**

A machine includes a processor and a memory connected to the processor. The memory stores instructions executed by the processor to receive a message and a message parameter indicative of a characteristic of the message, where the message includes a photograph or a video. A determination is made that the message parameter corresponds to a selected gallery, where the selected gallery includes a sequence of photographs or videos. The message is posted to the selected gallery in response to the determination. The selected gallery is supplied in response to a request.

## Description

### REFERENCE TO RELATED APPLICATION

This application claims the benefit of priority of U.S. Application No. 14/578,258, filed December 19, 2014, which is hereby incorporated by reference in its entirety.

### FIELD OF INVENTION

This invention relates generally to exchanging electronic messages in a computer network. More particularly, this invention relates to a gallery of messages associated with a shared interest.

### BACKGROUND OF THE INVENTION

Mobile devices, such as smartphones, are used to generate messages. The messages may be text messages, photographs (with or without augmenting text) and videos. Users can share such messages with individuals in their social network. However, there is no mechanism for automatically routing a message with content related to a shared interest to a gallery of messages.

### SUMMARY OF THE INVENTION

A machine includes a processor and a memory connected to the processor. The memory stores instructions executed by the processor to receive a message and a message parameter indicative of a characteristic of the message, where the message includes a photograph or a video. A determination is made that the message parameter corresponds to a selected gallery, where the selected gallery includes a sequence of photographs or videos. The message is posted to the selected gallery in response to the determination. The selected gallery is supplied in response to a request.

### BRIEF DESCRIPTION OF THE FIGURES

The invention is more fully appreciated in connection with the following detailed description taken in conjunction with the accompanying drawings, in which:
FIGURE 1 illustrates a system configured in accordance with an embodiment of the invention.
FIGURES 2 illustrates a registration process utilized in accordance with an embodiment of the invention.
FIGURE 3 illustrates a gallery collection with enrollment prompts utilized in accordance with an embodiment of the invention.
FIGURE 4 illustrates a message generation interface utilized in accordance with an embodiment of the invention.
FIGURE 5 illustrates server side processing performed in accordance with an embodiment of the invention.
FIGURE 6 illustrates server side processing associated with another embodiment of the invention.

Like reference numerals refer to corresponding parts throughout the several views of the drawings.

### DETAILED DESCRIPTION OF THE INVENTION

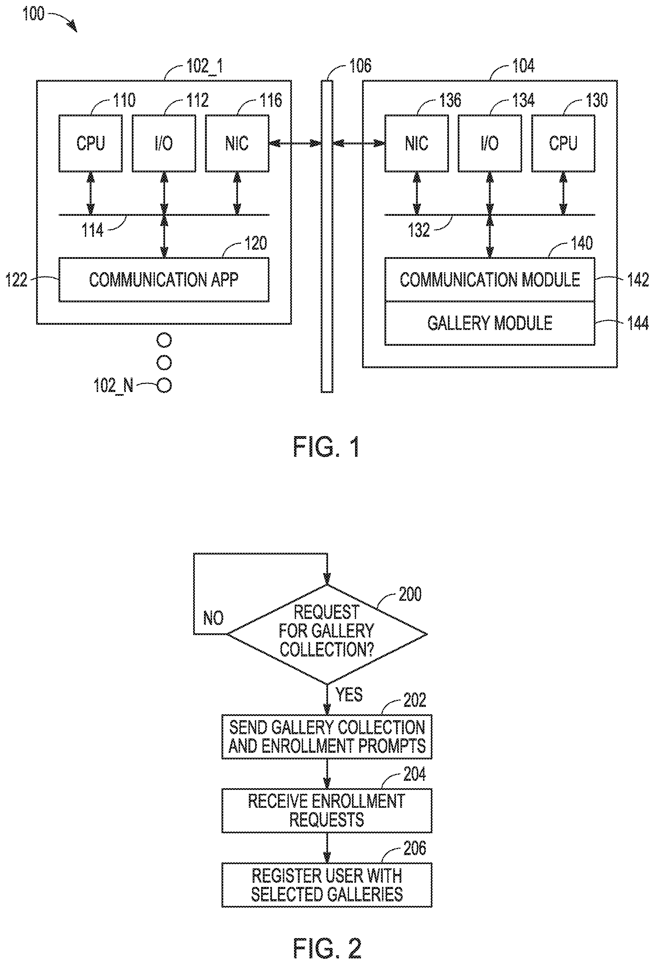

Figure 1 illustrates a system 100 configured in accordance with an embodiment of the invention. The system 100 includes a set of client devices 102_1 through 102_N and at least one server 104 connected via a network 106. The network 106 may be any combination of wired or wireless networks.

Each client device 102 has standard components, such as a central processing unit 110 and input/output devices 112 connected via a bus114. The input/output devices 112 may include a touch display, dedicated control buttons, physical connectors, speakers and the like. A network interface circuit 116 is also connected to the bus 114 and provides connectivity to network 106. A memory 120 is also connected to the bus 114. The memory 120 stores a communication application 122. The communication application 122 includes instructions executed by CPU 110 to coordinate communications with server 104 and/or other client devices. In particular, the communication application 122 is operative with server 104 to exchange messages between client devices. The client device may be in the form of a tablet, smartphone, wearable technology, laptop computer or desktop computer.

The server 104 also includes standard components, such as a central processing unit 130, a bus 132, input/output devices 134 and a network interface circuit 136. A memory 140 is connected to the bus 132. The memory 140 stores a communication module 142. The communication module 142 includes instructions executed by the CPU 130 to coordinate communications with client devices 102. More particularly, the communication module 142 coordinates the exchange of messages between client devices 102. The memory 140 also stores a gallery module 144. The gallery module 144 includes instructions executed by the CPU 130 to store messages from individuals with a shared interest or some other association. Examples of types of associations contemplated by embodiments of the invention include photos or videos taken by users that include the same or similar object(s), such as guitar from a particular manufacturer, a designer handbag, a soft drink or beer can, etc. The messages form a gallery, which may be supplied to a client device 102 in response to a request from a client device 102. The gallery may be a sequence of photographs and/or videos. Any of a text message, user drawings/annotations, animations, photo filters may be associated with a photograph or video (e.g., as an overlay). In one embodiment, the gallery is available for a specified transitory period of time (e.g., a day, during an event, etc.).

Figure 2 illustrates a process for registering users with common interests that desire to participate in posting to a gallery. This process may be implemented by the gallery module 144. The gallery module 144 waits for a request for a gallery collection 200 from a client device 102. In the event of a request (200 - Yes), a gallery collection and enrollment prompts 202 are sent from the server 104 to a client device 102.

Embodiments contemplate that a request could include an express request sent by a user. For example, a user may request to participate in a gallery by navigating to a 'request' screen from a user interface on the device display. In these examples, the user may select from any number of existing galleries or create a new gallery by keying in or otherwise describing the gallery. Another example of an express request to participate in a gallery may include an action on the part of the user from an annotation feature offered from an image. For instance, after a picture or image has been taken, some embodiments allow a user to add text, graphics, images, etc. to the picture/video. During this annotation process, the input and detection of a particular key or swipe may be used to indicate an intent to add that picture/video to a particular gallery. As an example, the use of a hashtag ("#") or swipe added to the text "Clippers" may be used to submit the picture/video to a Clippers gallery.

In addition to express user requests to submit content to a gallery, passive requests are also contemplated. For example, the detection of a particular object in a picture or video (detected using, e.g., object recognition processes to detect an object or audio fingerprinting technologies to detect a song, etc.) could be used to prompt a user to join a gallery associated with the object or even automatically post to an existing gallery (e.g., with the user's consent). For example, if a user takes a picture or video of a Coca Cola bottle, upon detection of the bottle, the user may be asked if he or she wishes to participate in a Coca Cola gallery. Alternatively, the user may be asked if he or she wishes to post directly to a gallery without joining. In yet other embodiments, the user's video or picture may be posted directly to the gallery (perhaps after receiving a blanket authorization at some point earlier).

In additional embodiments, a revenue sharing process may be implemented to facilitate payments to the user for use of his or her image. For example, a user image may be added to a gallery sponsored by Coca Cola and in return for contributing to Coca Cola's gallery, a user may receive compensation on a flat-fee, per view or revenue share basis.

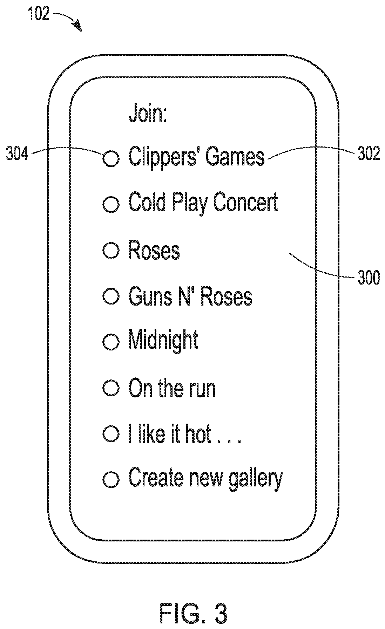

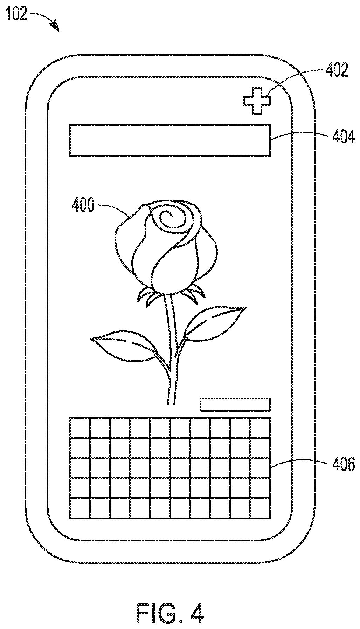

Figure 3 illustrates an example of a gallery collection 300 displayed on a client device 102. The gallery collection 300 may be supplied by activating an icon (such as icon 402 of Figure 4). Alternately, the gallery may be supplied in accordance with the examples provided above. The gallery collection 300 includes individually listed galleries, such as 302 and an associated prompt 304. In this example, the prompt 304 is a radio button, selection of which results in a selected gallery. Hovering over or tapping the text description 302 of the gallery may result in the display of additional information about the gallery. In the case of "Clippers' Games" a gallery is formed during the course of each basketball game played by the Clippers. Thus, the gallery is a recurring gallery. Messages associated with the Clippers are posted during the course of each basketball game. Thus, a collection of messages is available for the transitory duration of each basketball game. Of course, other examples are also possible including availability for a set amount of time after the event (e.g., twenty-four hours, one week, etc.).

The next example in the gallery collection 300 is a concert. This is a single event gallery that lasts for a set amount of time after the duration of the event. The next example in the gallery collection 300 is for a shared interest in an object, such as roses. This may be an ongoing gallery that is used by registrants to post photographs or videos of roses.

The next example in the gallery collection 300 is for the band Guns N' Roses. This gallery is constructed to receive messages from individuals with a shared interest in the band. In one embodiment, individual songs from the band may be selected. Thereafter, messages that reference or incorporate the individual songs may be posted to the gallery.

The collection may also include a theme such as midnight. Messages generated on or around midnight are posted to the gallery. The messages may be identified by a timestamp associated with the message.

The collection may also include a theme such as "on the run". This gallery is constructed to receive messages from client devices that are in motion (as measured by an accelerometer, gyroscope, GPS signal and the like associated with the client device).
Messages from such devices are posted to the gallery.

The collection may also include a theme such as "I like it hot..." to post messages when the temperature in a geolocation associated with a message exceeds some threshold (e.g., 90° F). The geolocation may be where the message is generated. The temperature may be obtained for the specified geolocation by any number of online weather information resources or from a thermometer device built into the device.

A final option shown in Figure 3 is a request to create a new gallery. Activating the associated radio button 304 may result in a set of prompts that allows a user to define a new gallery. The definition may include a gallery name, keywords associated with the gallery, objects associated with the gallery, and the like.

Returning to Figure 2, the gallery module 144 receives enrollment or participation requests 204. In response to such requests, a user is registered with one or more selected galleries. Thus, a user registers with one or more selected galleries 206. Thereafter, any message relevant to a selected gallery is automatically routed to the selected gallery. This may be accomplished without the user separately designating the gallery as a destination for the message. A single message may be automatically routed to several galleries if the message has indicia relevant to each of the several galleries.

Figure 4 illustrates a client device 102 that has taken a picture of a rose 400. The communication application 122 and/or gallery module 144 may be configured with instructions executed by the processor to recognize the rose (e.g., machine vision may be used to designate the object as a rose). If the user is registered with the rose gallery, the message is automatically routed to the rose gallery. An icon 402 may be supplied to annotate a message. Activation of the icon 402 may result in a text entry box 404 being supplied, along with a keyboard. The user may designate that the message includes a rose or may type in any other type of message. A message recipient list may be invoked through the icon 402 or through a swiping motion. The message recipient list is an existing list of contacts for the user. Each contact selected will receive a copy of the message via routing through the communication module 142. Thus, for this message there are intentionally designated message recipients. However, depending upon the number of galleries that a user is registered with, the message may be automatically forwarded to relevant galleries without the user designating such galleries for the message.

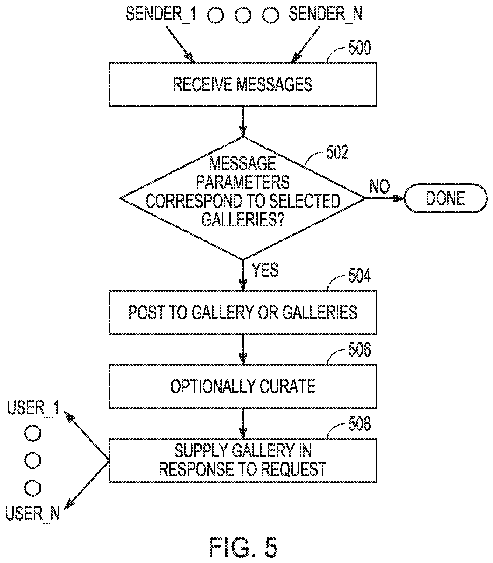

Figure 5 illustrates operations associated with an embodiment of the gallery module 144. The top of the figure illustrates a set of message senders, i.e., Sender_1 Through Sender_N. Each message sender is associated with a client device 102.

The server 104 receives messages 500 from any number of senders. Each message is evaluated to determine whether message parameters correspond to selected galleries 502. For example, if the user has registered for the roses gallery and generates the message shown in Figure 4, then the message corresponds to a selected gallery (502 - Yes). Any number of message parameters may be used. For example, in the case of the rose picture in Figure 4, the rose may be a designated object from machine vision operations performed by the gallery module. Alternately, or in addition, text associated with the message may be a parameter that is evaluated for relevance to a selected gallery. For example, optical character recognition or word matching techniques may be used to link a message with a gallery. Each gallery may have an associated collection of key words and/or designated objects that are used to determine correspondence between a message and a gallery. Other message parameters may include a time stamp (relevant to the midnight gallery), speed indicia (relevant to the "on the run" gallery) and temperature (relevant to the "I like it hot..." gallery).

If the message does not have a parameter relevant to a selected gallery (502 - No), then processing by the gallery module 144 is completed. The message is then routed in a standard manner by the communication module 142. If the message does have a parameter corresponding to a selected gallery (502 - Yes), the message is posted to one or more galleries 504.

The gallery module 144 may include a curation interface that allows a gallery administrator to optionally curate the gallery 506. For example, the curation interface may allow the administrator to delete inappropriate or redundant messages. Alternately, machine vision and content rules may be used to automatically curate the gallery. In embodiments that include compensation to be paid to a user, the curation interface may be configured to make automatic payments to the users for the use of their pictures or videos. The final operation of Figure 5 is to supply the gallery in response to requests 508 from any number of users.

Embodiments of the invention utilize galleries with specified transitory periods of time (e.g., a day, or during an event). Each gallery may include individual messages shown in sequence, where the individual messages are photographs or videos. Text may accompany a photograph or video, as shown in connection with Figure 4.

An embodiment of the invention has a gallery with content set to an audio time line. In some embodiments, the audio time line could be a song or a video clip. As discussed in connection with Figure 3, a band may have a designated gallery with a selectable song. If a user registers with a song then a message that incorporates the song may be posted to the gallery. Embodiments of the invention utilize short (e.g., 3-6 seconds) video messages. Therefore, a collection of messages can be constructed for different segments of the audio time line associated with a song. As a result, a single song may have an associated mash-up of video segments. Observe here that the audio time line determines the video content. Typically, video content is used to establish a sequence of videos. The use of the audio time line as a guiding factor results in interesting and artistic combinations of videos.

Instead of a song, the audio time line may be a narrative, such as a speech or a dialogue. For example, a "Gettysburg Address" gallery may be formed with a voice over of the famous speech by Abraham Lincoln. Video segments that include words from the speech may be combined to populate a complete audio time line for the speech. Consequently, a voice over of the speech may have an associated mash-up of video segments.

There are known techniques for evaluating audio content. In particular, there are online services, such as Shazam^{®} and Soundhound^{®}, which provide real-time identification of songs and other audio tracks. The gallery module 144 may be configured to access such online services and/or incorporate its own audio fingerprint identification techniques. The object recognition and fingerprinting operations disclosed herein may be performed on any of client device 102, server 104 or a third-party device (not shown).

As described above, embodiments contemplate that a user could be compensated by e.g., the audio time line owner or rights holder for helping to create and promote a particular song or content. Thus, a user that contributes to an audio time line could be compensated by some amount for each viewing of the time line.

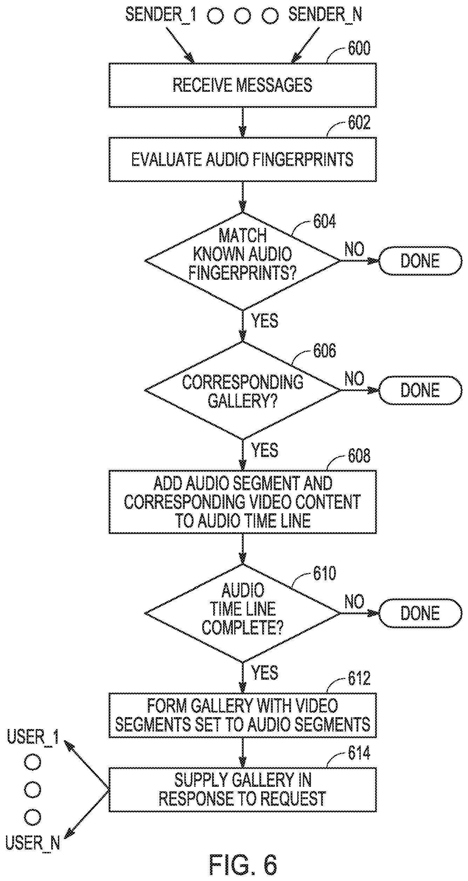

Figure 6 illustrates audio time line processing performed in accordance with an embodiment of the invention. The gallery module 144 receives messages 600 from any number of message senders (Sender_1 through Sender_N). Each message is evaluated for audio fingerprints 602. If there are no matches to known audio fingerprints (604 - No), then the gallery module 144 processing is completed and the message is routed in a standard manner using communication module 142.

If matches with known audio fingerprints are established (604 - Yes), a determination is made whether there is a selected gallery with the same audio fingerprint. That is, has the message sender registered with a gallery with the same audio fingerprint. If not (606 - No), processing is complete. If so (606 - Yes), the audio segment and corresponding video content are added to the audio time line 608. For example, the video message may have audio fingerprints for seconds 58 through 66 of a video time line. The video message is then positioned at that location on the video time line.

It is then determined whether the audio time line is complete 610. If not (610 - No), the processing of the message is completed and the process may wait for the submission of additional segments for possible inclusion into the audio time line. If so (610 - Yes), a gallery is formed with video segments set to audio segments 612. The audio segments may be a master track of a song or narrative. Alternately, the audio segments from the videos themselves may be used. Different criteria may be used to determine whether and audio time line is complete. All time slots in the audio time line need not be filled.

The resultant gallery is then supplied to users in response to requests 614. Thus, users may obtain crowd sourced video mash-ups set to an audio time line.

Those skilled in the art will appreciate that the disclosed techniques provide improved technical results in the field of message combining and sharing. Messages are automatically shared with others that have a common interest, as expressed through a registration process. After the registration process, collections of messages are automatically generated based upon automated evaluation of message content. This automatic process may or may not be executed without a user interface and user input at the server. Thus, an autonomous message combining and sharing system is disclosed that omits the cost of a human operator and is able to operate as fast as a processor operates.

Embodiments of the invention include ephemeral galleries that reduce power consumption and administrative overhead. The ephemeral galleries may be configured for self-execution, for example, by setting message parameters that will establish inclusion in a gallery and setting a transitory gallery period defined by an open time and a close time. The gallery may be associated with a single ephemeral time period (e.g., in the case of a concert) or a recurring ephemeral time period (e.g., in the event of galleries for each basketball game played).

The crowd sourced galleries provide content from many perspectives. An embodiment of the invention establishes innovative video mash-ups set to an audio time line as opposed to a flow of video images. Thus, establishing a novel technique for message combining.

An embodiment of the present invention relates to a computer storage product with a non-transitory computer readable storage medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media, optical media, magneto-optical media and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter. For example, an embodiment of the invention may be implemented using JAVA^{®}, C++, or other object-oriented programming language and development tools. Another embodiment of the invention may be implemented in hardwired circuitry in place of, or in combination with, machine-executable software instructions.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.
Embodiment of the present disclosure can be described in view of the following clauses: 1. A machine, comprising:
a processor; and
a memory connected to the processor, the memory storing instructions executed by the processor to:
   receive a message and a message parameter indicative of a characteristic of the message, wherein the message includes a photograph or a video,
   make a determination that the message parameter corresponds to a selected gallery, wherein the selected gallery includes a sequence of photographs or videos,
   post the message to the selected gallery in response to the determination,
   supply the selected gallery in response to a request.
2. The machine of clause 1 wherein the memory stores instructions executed by the processor to curate the selected gallery, wherein the instructions executed by the processor to curate include instructions to remove selected photographs or videos.
3. The machine of clause 1 wherein the memory stores instructions executed by the processor to
   send a gallery collection and corresponding enrollment prompts to a user,
   receive an enrollment request from the user for the selected gallery, and
   register the user with the selected gallery.
4. The machine of clause 3 wherein the instructions executed by the processor to send a gallery collection and corresponding enrollment prompts to a user are executed in response to an express request from the user.
5. The machine of clause 3 wherein the instructions executed by the processor to send a gallery collection and corresponding enrollment prompts to a user are in response to an evaluation of content associated with the message.
6. The machine of clause 1 wherein the memory stores instructions executed by the processor to supply prompts that solicit the definition of a new gallery.
7. The machine of clause 6 wherein the prompts includes prompts to solicit a gallery name.
8. The machine of clause 6 wherein the prompts include prompts to solicit gallery keywords.
9. The machine of clause 6 wherein the prompts include prompts to solicit a gallery object.
10. The machine of clause 1 wherein the parameter is a designated object in the photograph or video.
11. The machine of clause 10 wherein the designated object is specified by a sender of the message.
12. The machine of clause 10 wherein the memory stores instructions executed by the processor to recognize the designated object.
13. The machine of clause 1 where the parameter is a time stamp associated with the message.
14. The machine of clause 1 wherein the parameter is speed indicia associated with a device that generates the message.
15. The machine of clause 1 wherein the parameter is a temperature associated with the location at which the message is generated.
16. The machine of clause 1 wherein the selected gallery is available for a specified transitory period of time.
17. The machine of clause 1 wherein the selected gallery has individual messages shown in sequence, wherein the individual messages include photographs or videos.
18. The machine of clause 1 wherein the message has text accompanying the photograph or the video.
19. The machine of clause 1 wherein the memory stores instructions executed by the processor to automatically pay a message sender when a message from the sender is posted to the selected gallery.
20. The machine of clause 17 wherein the pay is supplied by a sponsor of the selected gallery.

## Claims

1. A server (104), comprising:
a processor (130); and
a memory (140) connected to the processor, the memory storing instructions executed by the processor to:
send (202) a gallery collection and corresponding enrollment prompts to a user, each gallery in the gallery collection including a sequence of photographs or videos;
receive (204) enrollment requests from the user for one or more selected galleries;
register (206) the user with the selected galleries in response to said enrollment requests;
and thereafter to:
receive (500) a message from a user, the message including:
a photograph or a video (400); and
a message parameter indicative of a characteristic of the message;
receive, from the user, an indication of an intent to add the photograph or video to a particular gallery, the indication of the intent comprising an input of a particular key or swipe;
in response to the indication of the intent, determine (502) based on the message parameter that the message corresponds to the particular gallery;
in response to said determination, post (504) the message to the particular gallery; and
supply (508) the particular gallery to one or more users in response to requests received from the one or more users.

2. The server (104) of claim 1, wherein receiving the indication of the intent comprises receiving the indication of the intent during an annotation process in which the user is annotating the photograph or the video (400).

3. The server (104) of claim 1, wherein the memory stores instructions executed by the processor to curate the created gallery, wherein the instructions executed by the processor to curate include instructions to remove selected photographs or videos.

4. The server (104) of claim 1 wherein the memory stores instructions executed by the processor to:
receive from a client device a request to create a new gallery;
supply prompts that solicit from a user of the client device a definition of the new gallery, the definition including one or more of: a gallery name, keywords associated with the gallery, and objects associated with the gallery; and
register the user with the new gallery.

5. The server (104) of claim 3, wherein the created gallery is available for a specified transitory period of time.

6. The server (104) of claim 1, wherein the selected gallery when supplied has individual messages shown in sequence, wherein the individual messages include photographs or videos.

7. The server (104) of claim 1, wherein the instructions executed by the processor to send a gallery collection and corresponding enrollment prompts to a user are executed in response to an express request from the user.

8. The server (104) of claim 1, wherein the instructions executed by the processor to send a gallery collection and corresponding enrollment prompts to a user are in response to an evaluation of content associated with the message.

9. The server (104) of claim 1, wherein the prompts include prompts to solicit one or more of: a gallery name, gallery keywords, and a gallery object.

10. The server (104) of claim 1, wherein the parameter is a designated object in the photograph or video.

11. The machine of claim 10, wherein the designated object is specified by a sender of the message.

12. The server (104) of claim 11, wherein the memory stores instructions executed by the processor to recognize the designated object.

13. The server (104) of claim 1, where the parameter is a time stamp associated with the message.

14. The server (104) of claim 1, wherein the parameter is speed indicia associated with a device that generates the message or a temperature associated with the location at which the message is generated.

15. A method comprising:
sending (202) a gallery collection and corresponding enrollment prompts to a user, each gallery in the gallery collection including a sequence of photographs or videos;
receiving (204) enrollment requests from the user for one or more selected galleries;
registering (206) the user with the selected galleries in response to said enrollment requests;
and thereafter:
receiving (500) a message from a user, the message including:
a photograph or a video (400); and
a message parameter indicative of a characteristic of the message;
receiving, from the user, an indication of an intent to add the photograph or video to a particular gallery, the indication of the intent comprising an input of a particular key or swipe;
in response to the indication of the intent, determining (502) based on the message parameter that the message corresponds to the particular gallery;
in response to said determination, posting (504) the message to the particular gallery; and
supplying (508) the particular gallery to one or more users in response to requests received from the one or more users.
